# EUROPÄISCHE PATENTSCHRIFT

(11) **EP 0 820 658 B1**
(45) Veröffentlichungstag und Bekanntmachung des Hinweises auf die Patenterteilung: **03.03.1999**
(21) Anmeldenummer: 96914906.1
(22) Anmeldetag: 12.04.1996
(51) Int. Cl.: H02P 9/30, H02J 7/14

(54) **SCHALTUNGSANORDNUNG ZUR BATTERIELOSEN STROMVERSORGUNG DER ELEKTRONISCHEN STEUERUNG EINER DURCH EINEN VERBRENNUNGSMOTOR ANGETRIEBENEN ARBEITSMASCHINE**
CIRCUIT FOR SUPPLYING POWER, WITHOUT THE NEED FOR A BATTERY, TO THE ELECTRONIC CONTROL UNIT OF A MACHINE DRIVEN BY AN INTERNAL-COMBUSTION ENGINE
CIRCUIT DESTINE A L'ALIMENTATION SANS BATTERIE DE LA COMMANDE ELECTRONIQUE D'UNE MACHINE ENTRAINEE PAR UN MOTEUR A COMBUSTION INTERNE

(30) Priorität: 12.04.1995 DE 29506350 U
(43) Veröffentlichungstag der Anmeldung: 28.01.1998
(73) Patentinhaber: Dolmar GmbH, 22045 Hamburg (DE)
(72) Erfinder: KLARE, Hartmut, D-98554 Benzhausen (DE); SINGER, Andreas, D-08427 Fraureuth (DE)
(74) Vertreter: Gerbaulet, Hannes
(86) Internationale Anmeldenummer: EP9601557
(87) Internationale Veröffentlichungsnummer: WO9632774

(56) Entgegenhaltungen:
- DE-A- 3 841 610

## Beschreibung

### Anwendungsgebiet

Die Erfindung bezieht sich auf das Gebiet der motorgetriebenen Arbeitsmaschinen. Sie geht aus von einer Schaltungsanordnung zur batterielosen Stromversorgung der elektronischen Steuerung einer durch einen Verbrennungsmotor angetriebenen Arbeitsmaschine, insbesondere Handarbeitsmaschine, mit einer Nenngleichspannung, welche Arbeitsmaschine einen durch den Verbrennungsmotor angetriebenen Wechselspannungsgeneratora aufweist, der eine von der Drehzahl des Verbrennungsmotors abhängige Generatorspannung abgibt, wobei die Schaltungsanordnung eine erste Gleichrichterschaltung umfaßt, welche die Generatorspannung in eine Zwischengleichspannung umwandelt.

### Stand der Technik

Eine Schaltungsanordnung der eingangs genannten Art ist z. B. für das Gebiet der Kraftfahrzeugtechnik aus der DE-A1-38 41 610 bekannt.

Bei Arbeitsmaschinen, die von Verbrennungsmotoren angetrieben werden, wird zur Realisierung von Steuerfunktionen elektrische Energie bzw. Spannung benötigt, die üblicherweise und vorrangig aus Akkumulatoren bereitgestellt oder durch von dem Motor angetriebene Generatoren erzeugt wird. Der Einsatz von Akkumulatoren vor allem bei Handarbeitsmaschinen bedeutet einen zusätzlichen Aufwand, zumal auch das Langzeitspeichervolumen begrenzt ist. Beim batterielosen Betrieb, wie er z. B. in der DE-A1-38 41 610 für ein Kraftfahrzeug vorgesehen ist, reicht beim Startvorgang zudem die Spannung, die aus dem normalen Generator erzeugt wird, nicht aus, um zusätzliche Steuerungen zu realisieren. Zukünftig wird dies aber beim Einsatz von Motoren z. B. mit Einspritzung erforderlich sein, um evtl. ein Ventil oder dgl. zu betätigen.

Bei der Anmelderin wurde für eine elektronisch gesteuerte Kettensäge bereits eine Stromversorgung realisiert, die ebenfalls auf Zusatzenergie verzichtet. Nachteilig war jedoch dabei, daß für den Startvorgang ein Teil der Zündenergie mit verwendet wurde, so daß sich durch den damit verbundenen Stromentzug das Anspringverhalten verschlechterte. Da vor allem das Startverhalten bei Handarbeitsmaschinen für den Bedienkomfort mitentscheidend ist, ist eine solche Lösung nicht unproblematisch.

### Aufgabe, Lösung, Vorteile

Es ist daher Aufgabe der Erfindung, eine Schaltungsanordnung anzugeben, die es erlaubt, ohne Zusatzbatterien die Elektronik einer motorbetriebenen Arbeitsmaschine auch in der Startphase sicher mit der notwendigen Nenngleichspannung zu versorgen, und die zugleich einfach und robust aufgebaut ist.

Die Aufgabe wird durch die im Anspruch 1 angegebenen Merkmale gelöst.

Hierbei ist erfindungsgemäß vorgesehen, daß die Schaltungsanordnung weiterhin erste Mittel umfaßt, welche der ersten Gleichrichterschaltung nachgeschaltet sind und aus der Zwischengleichspannung durch geregelte Hochtransformation die Nenngleichspannung erzeugen, solange bei kleinen Drehzahlen die Zwischengleichspannung kleiner ist als die Nenngleichspannung.

Die ersten Mittel sind aufgrund der Hochtransformation in der Lage, bereits aus kleinen Zwischengleichspannungen, die in der Startphase beispielsweise nur 20 % der Nenngleichspannung ausmachen, die notwendige Nenngleichspannung zu erzeugen. Erreicht der Motor später seine höherliegende Leerlaufdrehzahl, kann die Nenngleichspannung unter Umgehung der ersten Mittel direkt durch Abregelung aus der Zwischengleichspannung abgeleitet werden.

Gemäß einer bevorzugten Ausführungsform der Erfindung umfassen die ersten Mittel einen mit einer in Serie liegenden Induktivität zusammenwirkenden Schaltregler sowie eine nachgeschaltete zweite Gleichrichterschaltung. Durch die geschaltete Arbeitsweise erzeugt der Schaltregler in der Induktivität hohe Spannungsspitzen, die gleichgerichtet werden und eine hochtransformierte Ausgangsgleichspannung ergeben. Wird am Eingang des Schaltreglers die Nenngleichspannung erreicht, stellt der Schaltregler seine Funktion ein und die Zwischengleichspannung kann direkt über die Induktivität zum Ausgang der Schaltungsanordnung gelangen.

Um im Normalbetrieb bei höheren Drehzahlen eine konstante Nenngleichspannung zu gewährleisten, ist vorzugsweise zwischen der ersten Gleichrichterschaltung und den ersten Mitteln ein Spannungsregler angeordnet, welcher aus der Zwischengleichspannung die Nenngleichspannung erzeugt, wenn bei höheren Drehzahlen die Zwischengleichspannung größer als die Nenngleichspannung ist. Weiterhin sind vorzugsweise zweite Mittel vorgesehen, welche den Spannungsregler überbrücken, wenn die Zwischengleichspannung kleiner ist als die Nenngleichspannung. Hierdurch wird eine zweistufig arbeitende Stromversorgung realisiert: In der Startphase ist der Spannungsregler überbrückt und die Nenngleichspannung wird aus der (niedrigeren) Zwischengleichspannung durch Hochtransformation erzeugt. In der normalen Betriebsphase wird der Schaltregler aus- und der Spannungsregler zwischengeschaltet, so daß die Nenngleichspannung aus der (nun höheren) Zwischengleichspannung durch Abregelung erzeugt wird.

Weitere Ausführungsformen ergeben sich aus den abhängigen Ansprüchen.

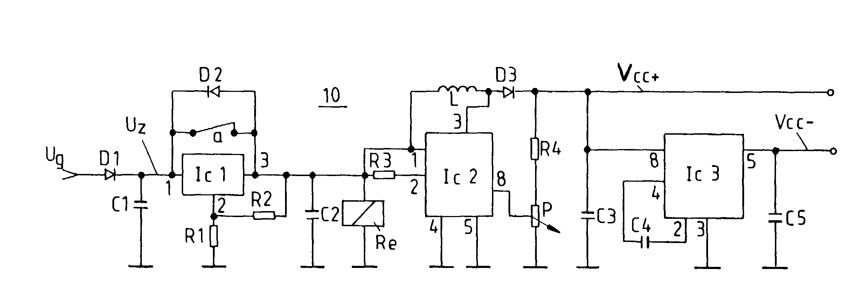

### Kurze Beschreibung der Zeichnung

Die Erfindung soll nachfolgend anhand eines Ausführungsbeispiels im Zusammenhang mit der Zeichnung näher erläutert werden. Die einzige Figur zeigt ein Schaltbild einer erfindungsgemäßen Schaltungsanordnung.

### Detaillierte Beschreibung der Erfindung und bester Weg zur Ausführung der Erfindung

Die in der Fig. dargestellte Schaltungsanordnung 10 weist einen Eingang für die Generatorspannung Ug und zwei Ausgänge für die positive Nenngleichspannung Vcc+ und die negative Nenngleichspannung Vcc- auf. Die an dem Eingang anliegende Generatorspannung Ug wird zunächst in der aus einer ersten Diode D1 und einem ersten Glättungskondensator C1 bestehenden ersten Gleichrichterschaltung gleichgerichtet und geglättet, so daß an ihrem Ausgang eine Zwischengleichspannung Uz ansteht.

Hinter der ersten Gleichrichterschaltung D1, C1 ist ein integrierter Spannungsregler Ic1 (z.B. vom Typ MC7812) mit den Widerständen R1 und R2 angeordnet. Die Längsregelstrecke des Spannungsreglers Ic1 ist durch einen Öffnungskontakt a überbrückbar, dem eine Diode D2 parallelgeschaltet ist. Der Öffnerkontakt a gehört zu einem Relais Re, welches parallel mit einem weiteren Kondensator C2 am Ausgang des Spannungsreglers Ic1 liegt. Das Relais RE ist so ausgewählt, daß es anzieht, wenn die an ihm liegende Spannung in die Nähe der Nenngleichspannung Vcc kommt bzw. etwa gleich dieser Spannung ist.

Ist die Zwischengleichspannung Uz (z.B. in der Startphase) deutlich kleiner als die Nenngleichspannung Vcc, bleibt das Relais RE abgefallen. Der Öffnerkontakt a ist geschlossen und überbrückt den Spannungsregler Ic1. Die Zwischengleichspannung Uz gelangt über den Öffnerkontakt a ungeregelt zum nachfolgenden Schaltungsteil Ic2, Ic3. Der Spannungsregler Ic1 wird erst wirksam, wenn die Generatorspannung Ug bzw. die daraus abgeleitete Zwischengleichspannung Uz so hoch ist, daß das Relais RE anzieht und den Öffnerkontakt a öffnet. Die steigende Zwischengleichspannung Uz wird dann durch den Spannungsregler Ic1 auf die Nenngleichspannung Vcc abgeregelt.

Ist die Zwischengleichspannung Uz kleiner als die Nenngleichspannung Vcc (Öffnerkontakt a geschlossen; Relais RE abgefallen), wird die Zwischengleichspannung Uz mittels einer Schaltung aus Serien-Induktivität L und Schaltregler Ic2 auf die Nenngleichspannung Vcc geregelt hochtransformiert. Die an der Induktivität entstehenden Spannungspulse werden mittels einer zweiten Gleichrichterschaltung aus Diode D3 und Glättungskondensator C3 gleichgerichtet und als positive Nenngleichspannung Vcc+ an den Ausgang gegeben. Als integrierte Schaltregler Ic2 kommt beispielsweise eine Schaltung vom Typ SI17661 in Betracht. Der Widerstand R3 ist für den Betrieb des Schaltreglers Ic2 notwendig. Die Ausgangsspannung wird zu Regelzwecken über einen aus Widerstand R4 und Potentiometer P bestehenden einstellbaren Spannungsteiler abgegriffen.

Die Hochtransformation der Spannung mittels L und Ic2 ist bei Handarbeitsmaschinen wie Kettensägen oder dgl. insbesondere im Anrißmoment des Verbrennungsmotors notwendig. Die Startdrehzahl beträgt dabei ca. 1000 U/min, wobei an dem Wechselspannungsgenerator, der üblicherweise für eine Griffheizung der Kettensäge schon vorhanden ist, eine ausreichende elektrische Leistung entsteht. Die dabei erzeugte Spannung ist jedoch um ca. 80% kleiner als die notwendige Betriebsspannung (Nenngleichspannung), wie sie z.B. für ein Einspritzventil benötigt wird. Die direkt gleichgerichtete und geglättete Zwischengleichspannung Uz wird über den öffnerkontakt a direkt dem Schaltregler Ic2 zugeführt, der die Spannung über der Induktivität L zerhackt. Die somit gewonnene Induktionsspannung erreicht die Höhe der notwendigen Nenngleichspannung.

Erreicht bei höheren Drehzahlen die Zwischengleichspannung Uz den Wert der Nenngleichspannung Vcc, schaltet der Schaltregler Ic2 ab und die Zwischengleichspannung Uz passiert den Schaltregler Ic2 nur über die Induktivität L und die Diode D3. Gleichzeitig öffnet - wie oben bereits beschrieben - der Öffnerkontakt a, und die Abregelung durch den Spannungsregler Ic1 reduziert eine höher werdende Zwischengleichspannung Uz auf die Nenngleichspannung Vcc.

Um für die Elektronik zusätzlich auch die negative Nenngleichspannung Vcc- zur Verfügung zu stellen, ist schließlich noch eine integrierte Spannungsversorgungsschaltung Ic3 (z.B. vom Typ LT1073) mit den Kondensatoren C4 und C5 vorgesehen, die auf einen Ausgang für die negative Nenngleichspannung Vcc- arbeitet.

Insgesamt ergibt sich mit der Erfindung die Möglichkeit, besonders bei motorbetriebenen Handarbeitsmaschinen wie z.B. Kettensägen die eingebaute Elektronik ohne Zusatzbatterien auch in der Startphase des Motors sicher mit der notwendigen elektrischen Betriebsspannung zu versorgen.

### Bezugszeichenliste:

| | |
|---|---|
| Schaltungsanordnung | 10 |
| Öffnerkontakt | a |
| Kondensator | C1,..,C5 |
| Diode | D1,..,D3 |
| Spannungsregler | Ic1 |
| Schaltungsregler | Ic2 |
| Spannungsversorgungschaltung | Ic3 |
| Induktivität | L |
| Potentiometer | P |
| Widerstand | R1,..,R4 |
| Relais | RE |
| Generatorspannung | Ug |
| Zwischengleichspannung | Uz |
| Nenngleichspannung | Vcc |

## Patentansprüche

1. Schaltungsanordnung (10) zur batterielosen Stromversorgung der elektronischen Steuerung einer durch einen Verbrennungsmotor angetriebenen Arbeitsmaschine, insbesondere Handarbeitsmaschine, mit einer Nenngleichspannung (Vcc), welche Arbeitsmaschine einen durch den Verbrennungsmotor angetriebenen Wechselspannungsgenerator aufweist, der eine von der Drehzahl des Verbrennungsmotors abhängige Generatorspannung (Ug) abgibt, wobei die Schaltungsanordnung (10) eine erste Gleichrichterschaltung (D1, C1) umfaßt, welche die Generatorspannung (Ug) in eine Zwischengleichspannung (Uz) umwandelt,
dadurch gekennzeichnet,
daß die Schaltungsanordnung (10) weiterhin erste Mittel (L, Ic2, D3, C3) umfaßt, welche der ersten Gleichrichterschaltung (D1, C2) nachgeschaltet sind und aus der Zwischengleichspannung (Uz) durch geregelte Hochtransformation die Nenngleichspannung (Vcc) erzeugen, solange bei kleinen Drehzahlen die Zwischengleichspannung (Uz) kleiner ist als die Nenngleichspannung (Vcc).

2. Schaltungsanordnung nach Anspruch 1,
dadurch gekennzeichnet,
daß die ersten Mittel (L, Ic2, D3, C3) einen mit einer in Serie liegenden Induktivität (L) zusammenwirkenden Schaltregler (Ic2) sowie eine nachgeschaltete zweite Gleichrichterschaltung (D3, C3) umfassen.

3. Schaltungsanordnung nach Anspruch 2,
dadurch gekennzeichnet,
daß die zweite Gleichrichterschaltung (D3, C3) eine Diode (D3) und einen nachfolgenden Glättungskondensator (C3) umfaßt.

4. Schaltungsanordnung nach einem der Ansprüche 1 bis 3,
dadurch gekennzeichnet,
daß zwischen der ersten Gleichrichterschaltung (D1, C1) und den ersten Mitteln (L, Ic2, D3, C3) ein Spannungsregler (Ic1) angeordnet ist, welcher aus der Zwischengleichspannung (Uz) die Nenngleichspannung (Vcc) erzeugt, wenn bei höheren Drehzahlen die Zwischengleichspannung (Uz) größer als die Nenngleichspannung (Vcc) ist.

5. Schaltungsanordnung nach Anspruch 4,
dadurch gekennzeichnet,
daß zweite Mittel (RE, a) vorgesehen sind, welche den Spannungsregler (Ic1) überbrücken, wenn die Zwischengleichspannung (Uz) kleiner ist, als die Nenngleichspannung (Vcc).

6. Schaltungsanordnung nach Anspruch 5,
dadurch gekennzeichnet,
daß die zweiten Mittel (RE, a) ein in der Nähe der Nenngleichspannung (Vcc) anziehendes Relais (RE) mit einem Öffnerkontakt (a) umfassen, wobei der Öffnerkontakt (a) parallel zum Spannungsregler (Ic1) geschaltet ist, und das Relais (RE) mit der Zwischengleichspannung (Uz) beaufschlagt wird.

7. Schaltungsanordnung nach Anspruch 6,
dadurch gekennzeichnet,
daß das Relais (RE) zwischen dem Spannungsregler (Ic1) und den ersten Mitteln (L, Ic2, D3, C3) angeordnet ist.

8. Schaltungsanordnung nach einem der Ansprüche 1 bis 7,
dadurch gekennzeichnet,
daß hinter den ersten Mitteln dritte Mittel (Ic3) zur Erzeugung einer negativen Nenngleichspannung (-Vcc) vorgesehen sind.

## Claims

1. Circuit arrangement (10) for the batteryless power supply of the lectronic control of a machine driven by an internal combustion engine, more particularly a hand-operated machine, with a rated direct voltage (Vcc), which machine possesses an alternating voltage generator, which delivers a generator voltage (Ug) dependent upon the speed of the internal combustion engine in which case the circuit arrangement (10) comprises a first rectifier circuit (D1, C1) converting the generator voltage Ug) into an intermediate direct voltage (Uz),
characterized in that
the circuit arrangement (10) additionally comprises first means (L, Ic2, D3, C3) which are connected behind the first rectifier unit (D1, C2) and which, from the intermediate direct voltage (Uz), generate the rated direct voltage (Vcc) by means of a controlled upward. transformation for so long as, at low speeds, the intermediate direct voltage (Uz) is lower than the rated direct voltage (Vcc).

2. Circuit arrangement according to Claim 1,
characterized in that
the first means (L, IC2, D3, C3) comprise a switching controller (Ic2) interacting with an inductivity (L) disposed in series as well as with a second rectifier circuit (D3, C3) connected to as to follow.

3. Circuit arrangement according to Claim 2,
characterized in that
the second rectifier circuit (D3, C3) comprises a diode (D3) and a smoothing capacitor (3) connected after the latter.

4. Circuit arrangement according to any of Claims 1 to 3,
characterized in that,
between the first rectifier circuit (D1, C1) and the first means (L, Ic2, D3, C3), a first voltahe controller (Ic1) is disposed which generates the rated direct voltage (Vcc) from the intermediate direct voltage (Uz) when, at higher speeds, the intermediate direct voltage (Uz) is higher than the rated direct voltage (Vcc).

5. Circuit arrangement according to Claim 4,
characterized in that
second means (RE, a) are provided which bypass the voltage controller (Ic1) when the intermediate direct voltage is lower than the rated direct voltage (Vcc).

6. Circuit arrangement according to Claim 5,
characterized in that
the second means (RE, a) comprise a relay (RE) which attracts in the proximity of the rated direct voltage (Vcc) with a break-contact unit (a), the break-contact unit (a) being connected parallel to the voltage controller (Ic1) and the relay (RE) being acted upon with the intermediate direct voltage (Uz).

7. Circuit arrangement according to Claim 6,
characterized in that
the relay (RE) is disposed between the voltage controller (Ic1) and the first means (L, IC2, D3, C3).

8. Circuit arrangement according to any of Claims 1 to 7,
characterized in that,
behind the first means, third means (Ic3) are provided for the generation of a negative rated direct voltage (-Vcc).

## Revendications

1. Dispositif de couplage (10) pour l'alimentation en courant sans pile de la commande électronique d'une machine de travail entraînée par un moteur à combustion, en particulier d'une machine de travail manuel, avec une tension continue nominale (Vcc), laquelle machine de travail présente un générateur de tension alternative, entraîné par un moteur à combustion, qui fournit une tension de générateur (Ug) qui dépend du nombre de tours du moteur à combustion, le dispositif de couplage (10) comprenant un premier montage redresseur (D1, C1) qui transforme la tension du générateur (Ug) en une tension continue intermédiaire (Uz),
caractérisé en ce
que le dispositif de couplage (10) comprend en plus des premiers moyens (L, Ic2, D3, C3) qui sont intercalés à la suite du premier montage redresseur (D1, C2) et qui produisent à partir de la tension continue intermédiaire (Uz) la tension continue nominale (Vcc) par élévation de la tension par transformation asservie, tant que, pour un petit nombre de tours, la tension continue intermédiaire (Uz) est plus petite que la tension continue nominale (Vcc).

2. Dispositif de couplage selon la revendication 1,
caractérisé en ce
que les premiers moyens (L, Ic2, D3, C3) comprennent un régulateur de commutation (Ic2) qui coopère avec une inductance en série (L) ainsi qu'un second montage redresseur (D3, C3) intercalé à la suite.

3. Dispositif de couplage selon la revendication 2,
caractérisé en ce
que le second montage redresseur (D3, C3) comprend une diode (D3) et un condensateur de filtrage (C3) intercalé à la suite.

4. Dispositif de couplage selon l'une des revendications 1 à 3,
caractérisé en ce
qu'entre le premier montage redresseur (D1, C1) et les premiers moyens (L, Ic2, D3, C3) il est placé un régulateur de tension (Ic1) qui produit la tension continue nominale (Vcc) à partir de la tension continue intermédiaire (Uz) lorsque, pour un nombre de tours assez élevé, la tension continue intermédiaire (Uz) est plus grande que la tension continue nominale (Vcc).

5. Dispositif de couplage selon la revendication 4,
caractérisé en ce
que des seconds moyens (Re, a) sont prévus qui surmontent le régulateur de tension (Ic1) lorsque la tension continue intermédiaire (Uz) est plus petite que la tension continue nominale (Vcc).

6. Dispositif de couplage selon la revendication 5,
caractérisé en ce
que les seconds moyens (Re, a) comprennent un relais (Re) avec un contact de rupture (a) qui s'excite à proximité de la tension continue nominale (Vcc), le contact de rupture (a) étant monté en parallèle avec le régulateur de tension (Ic1) et le relais (Re) étant chargé avec la tension continue intermédiaire (Uz).

7. Dispositif de couplage selon la revendication 6,
caractérisé en ce
que le relais (Re) est placé entre le régulateur de tension (Ic1) et les premiers moyens (L, Ic2, D3, C3).

8. Dispositif de couplage selon l'une des revendications 1 à 7,
caractérisé en ce
que des troisièmes moyens (Ic3) pour la production d'une tension continue nominale négative (-Vcc) sont prévus derrière les premiers moyens.
